# EUROPEAN PATENT SPECIFICATION

(11) **EP 3 379 917 B1**
(45) Date of publication and mention of the grant of the patent: **09.10.2019**
(21) Application number: 15798475.8
(22) Date of filing: 25.11.2015
(51) Int. Cl.: A01G 3/053

(54) **COLLECTION ASSEMBLY FOR A POWER DEVICE**
AUFFANGANORDNUNG FÜR EINE LEISTUNGSVORRICHTUNG
ENSEMBLE DE COLLECTION POUR UN DISPOSITIF DE PUISSANCE

(43) Date of publication of application: 03.10.2018
(73) Proprietor: Husqvarna AB, 561 82 Huskvarna (SE)
(72) Inventor: KNOPF, Daniel, 89233 Neu-Ulm (DE); LUGERT, Martin, 89312 Günzburg (DE); BESSERER, Bernhard, 89264 Weissenhorn (DE); RUDOLF, Peter, 89250 Senden (DE); LAIBLE, Fritz, 89176 Asselfingen (DE); RUF, Michael, 89079 Ulm (DE)
(86) International application number: PCT/EP2015/077601
(87) International publication number: WO 2017/088912

(56) References cited:
- DE-U1- 29 901 877
- JP-A- 2002 233 243
- JP-A- 2010 178 661
- US-A- 2 668 411
- US-A- 4 071 951
- US-A- 5 659 958
- US-A1- 2009 235 536

## Description

### TECHNICAL FIELD

Example embodiments generally relate to outdoor power devices having a collection assembly and, more particularly, relate to collecting clippings resulting from the use of the outdoor power device.

### BACKGROUND

Handheld outdoor power devices such as hedge trimmers, grass trimmers, edgers, chainsaws, and/or the like, are often used to perform tasks relating to yard/grounds maintenance. For example, the power devices may be used to trim, cut, or saw material or vegetation, such as trees, bushes, branches, grass, hedges, etc. Vegetation cut off the top of a hedge, for example, by the power device may remain on the top of the material or vegetation. Vegetation cut off the side of the hedge by the power device may fall to the ground. When the operator is done trimming the hedge or hedges, the operator must then expend considerable time and effort to collect the vegetation clippings. Even after spending a significant amount of time collecting the clippings, the operator may not be able to collect the clippings from the ground as thoroughly as desired. DE29901877U1 discloses an electric hedge trimmer having a collecting bucket of a net.

### BRIEF SUMMARY OF SOME EXAMPLES

According to the invention, a power device is provided. The power device includes a blade assembly that includes at least one cutting blade and a motor assembly that powers the blade assembly. The power device includes a collection assembly. The collection assembly includes a rigid frame defining an opening and a bag assembly operably coupled to the rigid frame at the opening. The bag assembly includes a rotatable plate having an axis extending substantially parallel to the blade assembly, and a bag, where the bag creates a seal between the rigid frame and the rotatable plate.

The invention further provides for a collection assembly according to claim 11.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a side view of a hedge trimmer that may be configured in accordance with an example embodiment;
FIG. 2 illustrates a side view of a collection assembly operably coupled to a hedge trimmer that may be configured in accordance with an example embodiment; and
FIG. 3 illustrates a side view of the collection assembly with part of the bag assembly removed to reveal a rigid frame according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. The limitations of the scope of protection of the invention are provided by the appended set of claims. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

A power device such as hedge trimmer, grass trimmer, edger, brush cutter, chainsaw, and/or the like may be used by an operator to trim, cut, or saw material or vegetation, such as trees, bushes, branches, grass, hedges, etc. When the operator is finished trimming the material or vegetation, the operator will then have to manually collect all the clippings. Not only is this time consuming, the operator may not be able to gather all of the clippings as thoroughly as desired. Therefore, some example embodiments described herein provide a collection assembly operably coupled to the power device. Instead of the clippings of the material or vegetation falling to the ground when cut by the operator, the collection assembly may be used to collect and retain the clippings, regardless of whether the blade assembly of the power device is used in a horizontal, vertical, or at angle beyond the vertical cutting direction. Even further, the operator does not have to dismantle any part of the collection assembly when the operator changes cutting directions.

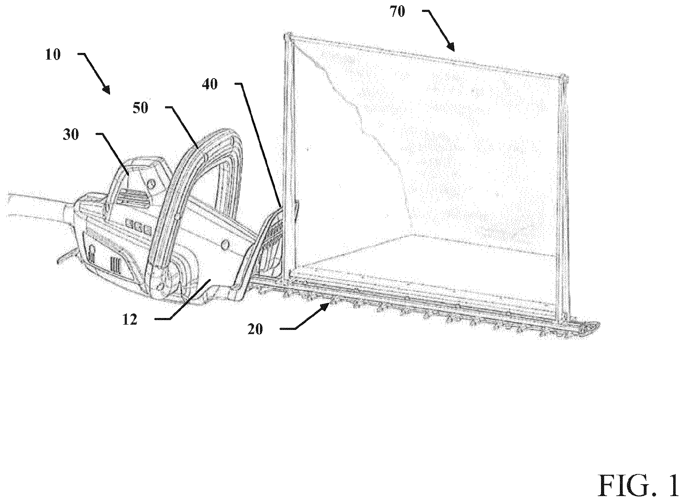

FIG. 1 illustrates an example of a trimmer 10 (e.g., a hedge trimmer) that may be configured in accordance with an example embodiment. It should be appreciated, however, that the trimmer 10 is merely one example of a power device that may be configured in accordance with an example embodiment. Thus, for example, some embodiments may be practiced in connection with other outdoor power devices such as edgers, brush cutters, chain saws, grass shears, and/or the like. Further, it should be appreciated that the trimmer 10 could be powered by gas, battery, electric, or any alternative energy source.

As shown in FIG. 1, the trimmer 10 includes a body 12, a motor assembly 30, and a blade assembly 20. In this example, the blade assembly 20 is a reciprocating cutting blade assembly having fixed and movable cutters. Rotating blades or other implements may be used in other alternative embodiments. In other embodiments, the blade assembly 20 may be any other working component of the outdoor power device employing an example embodiment. For example, if the outdoor power device is a chainsaw, the working implement may be the chainsaw bar and cutting chain disposed thereon. In some cases, the blade assembly 20 may include a blade assembly protector 192. The blade assembly protector 192 may protect a tip of the blade assembly 20 from wear and tear.

A power unit or motor assembly 30 of the trimmer 10 may be used to power movable cutters of the blade assembly 20 so that effective cutting may be employed relative to any vegetation or material that is between the fixed and movable cutters. The motor assembly 30, in the shown embodiment, utilizes an internal combustion engine. However, any other suitable motor (i.e. electric or battery powered) may be employed.

The trimmer 10 may also include a body 12. In an example embodiment, the body 12 may include a rear handle portion (not shown) and a front handle portion 50. An operator of the hedge trimmer 10 may use one hand to hold the front handle portion 50 and the other hand to hold the rear handle portion while operating the trimmer 10. In some embodiments, the rear handle portion may include a trigger or other control mechanism for engaging operation of the motor assembly 30 to power the blade assembly 20. The rear handle portion may be attached to a rear portion of the body 12 and the front handle portion 50 may be attached to a front portion of the body 12. In some embodiments, the body 12 may be formed from one or more plastic or other rigid components that may be molded to have a desired shape. The body 12 may substantially enclose the motor, gear assemblies, control circuitry and other internal components of the trimmer 10.

In some embodiments, the body 12 may include a hand guard 40 disposed between the blade assembly 20 and the portion of the body 12 that is proximate to the front handle 50. The hand guard 40 may provide shielding for the operator's hand relative to any debris that may be projected back toward the body 12 during operation of the blade assembly 20.

The trimmer 10 includes a collection assembly 70 for collecting clippings as the hedge trimmer 10 cuts material or vegetation such as a bush, hedge, tree, grass, and/or the like. The collection assembly 70 may collect and retain clippings within the collection assembly 70 regardless of whether the blade assembly 20 is cutting in the horizontal, vertical, or at an angle beyond the vertical direction. In an example embodiment, the collection assembly 70 may be operably coupled to the top of the blade assembly 20 when the blade assembly 20 is held in a normal operating position in which the cutting blades lie in a plane parallel to the ground. In further example embodiments, the collection assembly 70 may be operably coupled to the body 12 and the blade assembly 20. For example, the collection assembly 70 may be operably coupled to the hand guard 40 and the blade assembly protector 192 when the blade assembly 20 is held in a normal operating position in which the cutting blades lie in a plane parallel to the ground. The operable coupling of the collection assembly 70 may be accomplished by screws, brackets, or other conventional fastening means.

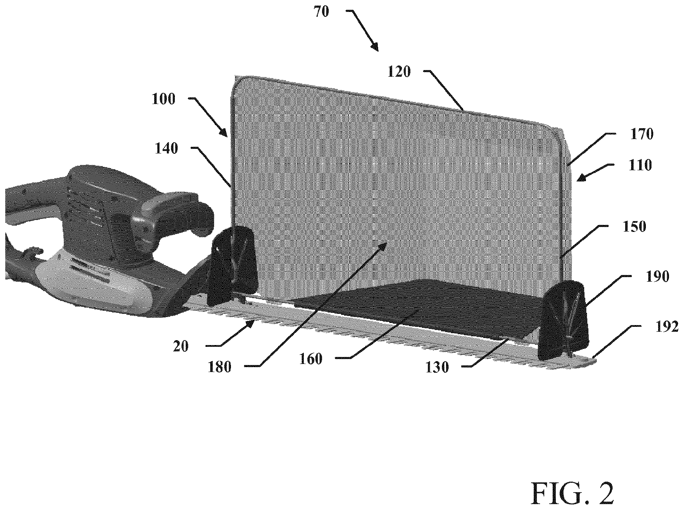

In some example embodiments, the collection assembly 70 may include a connection assembly 190 for removably coupling the collection assembly 70 to the blade assembly 20 (see FIG.2) and/or the body 12 of the trimmer 10. The connection assembly 190 may be integrally formed with the rigid frame 100 of the connection assembly 190 or may be a separate piece or pieces. The connection assembly 190 may connect the collection assembly 70 to the blade assembly 20 and/or the body 12 of the trimmer 10 by a clamp, snap, or screw, or other conventional fastening means. The connection assembly 190 may be disposed on both sides of the collection assembly 70. However, in other embodiments, the connection assembly 190 may be disposed only on one side of the collection assembly. The collection assembly 70 may extend substantially parallel to the blade assembly 20. In other words, the collection assembly 70 may extend from one end of the blade assembly 20 to the other end of the blade assembly 20. In other embodiments, the collection assembly 70 may extend only substantially proximate the length of the blade assembly 20.

During the operation of the trimmer 10, the collection assembly 70 allows the operator to collect clippings therein regardless of whether the operator is using the trimmer 10 in a right horizontal cutting direction, a left horizontal cutting direction, or a vertical cutting direction. Not only can the collection assembly 70 collect the clippings regardless of the direction in which the operator is using the trimmer 10, but the operator can collect clippings in any direction without having to remove and reattach the collection assembly 70 whenever the operator switches cutting directions. Even further, the collection assembly 70 does not have to be removed and reattached whenever the operator wishes to empty the collection assembly 70.

FIG. 2 illustrates an example of the collection assembly 70 operably coupled to the trimmer 10 and configured in accordance with an example embodiment. As shown in FIG. 2, the collection assembly 70 includes a rigid frame 100 which defines an opening 180 and a bag assembly 110 operably coupled to the rigid frame 100. The rigid frame 100 may include an upper section 120, a lower section 130, and side sections 140, 150. In an example embodiment, the upper section 120 and the lower section 130 may extend substantially parallel to the blade assembly 20 and substantially parallel to each other. The side sections 140, 150 may then extend between the upper section 120 and the lower section 130 so the side sections 140, 150 are substantially perpendicular to the upper section 120 and the lower section 130 and substantially parallel to each other. In a further example embodiments, the upper section 120 and the lower section 130 may not be substantially parallel to each other, for example, when the upper section 120 and/or the lower section 130 are curved. Even further, the side sections 140, 150 may not be parallel to each other nor perpendicular to the upper section 120 and the lower section 130, for example when the side sections may be curved.

In some cases, the rigid frame 100 defining the opening 180 may be substantially rectangular-shaped, so that the upper section 120 and the lower section 130 are longer than the side sections 140, 150. In a further example embodiment, the rigid frame 100 defining the opening 180 may be substantially squared-shaped, so that the upper section 120 and the lower section 130 are substantially the same length as the side sections 140, 150. When any of the upper section 120, the lower section 130, and the side sections 140,150 may be curved, the opening 180 may be substantially semicircular-shaped or substantially triangular-shaped.

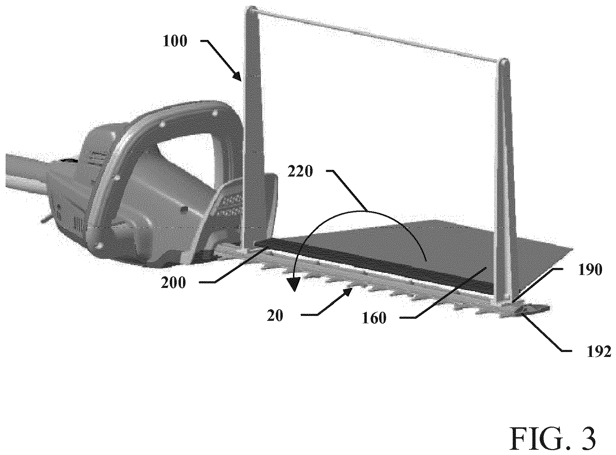

It should be appreciated that the upper section 120, lower section 130, and side sections 140,150 of the rigid frame 100 may be cast or molded as a unitary component (i.e. one piece). In other cases, the rigid frame 100 may be made of several pieces. For example, the upper section 120, the lower section 130, and the side sections 140, 150 may be all separate pieces that are operably coupled to each other to form a rigid frame 100. As further shown in FIG. 2, the upper section 120, lower section 130, and side sections 140, 150 of the rigid frame 100 may be made to have substantially uniform thickness. However, as shown in FIG. 3, the side sections 140, 150 may be substantially thicker than the upper section 120 and the lower section 130 of the rigid frame 100.

The bag assembly 110, which is operably coupled to the rigid frame 100 (as explained in greater detail below), includes a rotatable plate 160 and a bag 170. The rotatable plate 160, which is shown in greater detail in FIG. 3, is made of a rigid material to protect the bag 170 of the bag assembly 110 from being cut by the blade assembly 20. Even further, the rotatable plate 160 may define a trapezoidal shape. In further example embodiments, the rotatable plate 160 may define any shape which is rotatable through the opening 180 defined by the rigid frame 100.

The rotatable plate 160 may enable the bag assembly 110 to rotate through the opening 180 defined by the rigid frame 100 in order to accommodate a change in the side of the blade assembly 20 engaging the material or vegetation to be cut. For example, if the operator switches from the left cutting direction to the right cutting direction, the rotatable plate 160 is rotatable through the opening 180 defined by the rigid frame 100 enabling the bag assembly 110 to capture or contain the material or vegetation being cut on the opposite side. Anytime the operator wishes to again change the cutting direction of the blade assembly 20, the rotatable plate 160 is freely rotatable, as shown by arrow 220 in FIG. 3. Therefore, the operator may, but does not have to, urge or push the rotatable plate 160 through the rigid frame 100 in order to accommodate this change in the cutting direction. The rotatable plate 160 may rotate about an axis 200 that is located above and is substantially parallel to the blade assembly 20 of the trimmer 10. In some embodiments, the rotatable plate 160 may include a dowel or rod that defines the axis 200. In some cases, a dowel or rod may be operably coupled to the rotatable plate 160 or its axis 200, enabling rotation of the rotatable plate 160. In an example embodiment, the rotatable plate 160 may rotate up to 180 degrees with respect to the axis 200. In further example embodiments, the rotatable plate 160 may rotate more than 180 degrees with respect to the axis 200. The axis 200 may lie proximate to a longitudinal centerline of the blade assembly 20. Even further, the axis 200 may lie as close as 1/10cm above the blade assembly 20. However, in further example embodiments, the axis 200 may be located more than 1cm above the blade assembly.

In some cases, the axis 200 of the rotatable plate 160 may be cast or molded as a unitary component with the lower section 120 of the rigid frame 100. In other embodiments, the rotatable plate 160 may be operably coupled to the rigid frame 100 at its axis 200 by screws, brackets, or other conventional fastening means. The rotatable plate 160 or its axis 200 is operably coupled to the rigid frame 100 in such a way as be freely rotatable. The rotatable plate 160 is rotatable with respective to its axis 200 in response to a change in cutting direction of the trimmer 10 or by the operator's urging or pushing of the rotatable plate 160. In other words, the operator may urge or push the rotatable plate 160 through the rigid frame 100 in order to accommodate a change in the cutting direction, but the rotatable plate 160 will generally otherwise be freely rotatable as the rotatable plate 160 will hang downwards due to gravity.

As further shown in FIG. 2, the bag assembly 110 further includes the bag 170. The bag 170 may be made of a flexible fabric. In some cases, the bag 170 may be made of plastic foil, rubber, metal netting, or any other suitable fabric. In further example embodiments, , the flexible fabric may be resistant to tearing. Because the bag is made of a flexible material, the rotatable plate 160 may serve to protect the bag 170 from the blade assembly 20. Even further, as the bag may be made of a soft, flexible material, the bag 170 may be relatively lightweight making it relatively easy for the operator to move or urge the rotatable plate 160, and thus the bag 170, through the opening 180 defined by the rigid frame 100.

The bag 170 creates a seal between the rigid frame 100 and the rotatable plate 160 which enables the bag assembly 110 to capture and contain the material or vegetation being cut. In order to create the seal, the bag 170 may extend from the rigid frame 100 and terminate at the edges of the rotatable plate 160. In a further example embodiment, the bag 170 may extend from the rigid frame 100 over the top edge or the bottom edge of the rotatable plate 160 to create a seal. In an even further example embodiment, the bag 170 may extend from the rigid frame 100 over both the top edge and the bottom edge (or an entirety) of the rotatable plate 160 to create a seal. When creating a seal between the rigid frame 100 and the rotatable plate 160, the bag 170 may define a trapezoidal prism shape in combination with the rotatable plate in some cases. In a further example embodiment, the bag 170 may define a truncated pyramid when creating a seal between the rigid frame 100 and the rotatable plate 160. Because the bag 170 seals the rigid frame 100 and rotatable plate 160, the bag 170 is opened at the opening 180, which is positioned above the blade assembly 20, in this case. In some cases, the opening 180 of the bag 170 is maintained in a plane substantially perpendicular relative to a plane in which the blade assembly 20 lies regardless of whether the blade assembly 20 is cutting in a horizontal or vertical direction. In further example embodiments, the opening 180 of the bag 170 is maintained in a certain angle relative to the plane in which the blade assembly 70 lies. Because the opening 180 of the flexible bag 170 is maintained in a plane substantially perpendicular relative to a plane in which the blade assembly 20 lies, the bag 170 collects and retains the clippings when the blade assembly 20 is being used in a horizontal or vertical position.

The soft, flexible material of the bag 170 may allow the operator to empty or dispose of the clippings in a relatively easy manner. For example, as the bag assembly 110 may rotate in response to the operator moving it through the opening 180 defined by the rigid frame 100, the operator can adjust the rotatable plate 160 to a convenient position while the soft, flexible bag 170 can be manipulated for easy removal of the clippings from within the bag 170. Accordingly, without using tools or having to remove the entire collection assembly 70 or bag assembly 110, the operator can conveniently and easily remove and dispose of the clippings.

Example embodiments therefore represent a power device that include a collection assembly, where the collection assembly is configured to collect and retain clippings resulting from when the power device cuts, trims, saws, or otherwise separates material or vegetation. The power device includes a blade assembly that includes at least one cutting blade and a motor that powers the blade assembly. The power device further includes a collection assembly. The collection assembly includes a rigid frame defining an opening and a bag assembly operably coupled to the rigid frame at the opening. The bag assembly includes a rotatable plate having an axis located above and extending substantially parallel to the blade assembly, and a bag, where the bag creates a seal between the rigid frame and the rotatable plate.

In some embodiments, additional optional structures and/or features may be included or the structures/features described above may be modified or augmented. Each of the additional features, structures, modifications, or augmentations may be practiced in combination with the structures/features above and/or in combination with each other. Thus, some, all or none of the additional features, structures, modifications or augmentations may be utilized in some embodiments, as long as they fit within the scope of protection as provided by the appended set of claims. Some example additional optional features, structures, modifications, or augmentations are described below, and may include, for example, that the collection assembly is operably coupled to the blade assembly. In some cases, the collection assembly may further include a connection assembly for removably coupling the collection assembly to the blade assembly. Alternatively or additionally, some embodiments may include the collection assembly is operably coupled to a body of the power device and the blade assembly. In some cases, the collection assembly may further a connection assembly for removably coupling the collection assembly to the body of the power device and the blade assembly. In a further example embodiment, the rotatable plate rotates through the opening defined by the rigid frame accommodating a change in a side of the blade assembly engaging a material to be cut. In some cases, the rotatable plate is rotatable up to 180 degrees with respect to the axis. Alternatively or additionally, some embodiments may include that the bag is made from a flexible material. In a further example embodiment, the rotatable plate is made from a rigid material. In some cases, the rigid frame is substantially square-shaped. Alternatively or additionally, some embodiments may include that the rigid frame is substantially semicircular-shaped. Alternatively or additionally, some embodiments may include that the rigid frame is substantially triangular-shaped. Alternatively or additionally, some embodiments may include that the rigid frame comprises an upper section, a lower section, and two side sections all having a substantially same thickness. In a further example embodiment, the axis may lie proximate to a longitudinal centerline of the blade assembly. Alternatively or additionally, some embodiments may include that the bag defines a trapezoidal prism shape in combination with the rotatable plate. Alternatively or additionally, some embodiments may include that the bag defines a truncated pyramid shape in combination with the rotatable plate. Alternatively or additionally, some embodiments may include that the rotatable plate defines a trapezoidal shape. Alternatively or additionally, some embodiments may include that the rotatable plate defines a truncated pyramid shape. In a further example embodiment, the collection assembly may further include a connection assembly for removably coupling the collection assembly to the blade assembly.

It is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. Thus, the limitations of the scope of protection of the invention are provided by the appended claims.

## Claims

1. A power device comprising:
a blade assembly (20) comprising at least one cutting blade;
a motor assembly (30) that powers the blade assembly (20); and
a collection assembly (70), the collection assembly (70) comprising:
a rigid frame (100) defining an opening (180);
a bag assembly (110) having a bag (170) operably coupled to the rigid frame (100) at the opening (180), **characterized in that** the bag assembly (110) further comprising:
a rotatable plate (160) made of a rigid material having an axis (200) extending substantially parallel to the blade assembly (20); and
wherein the bag (170) creates a seal between the rigid frame (100) and the rotatable plate (160).

2. The power device of claim 1, wherein the collection assembly (70) is operably coupled to the blade assembly (20).

3. The power device of claim 2, wherein the collection assembly (70) further comprises a connection assembly (190) for removably coupling the collection assembly (70) to the blade assembly (20).

4. The power device of claim 1, wherein the collection assembly (70) is operably coupled to a body of the power device and the blade assembly (20).

5. The power device of claim 4, wherein the collection assembly (70) further comprises a connection assembly (190) for removably coupling the collection assembly (70) to the body of the power device and the blade assembly (20).

6. The power device of any of claims 1-5, wherein the rotatable plate (160) rotates through the opening (180) defined by the rigid frame (100) accommodating a change in a side of the blade assembly (20) engaging a material to be cut.

7. The power device of any of claims 1-6, wherein the rotatable plate (160) is rotatable up to 180 degrees with respect to the axis (200).

8. The power device of any of claims 1-7, wherein the bag (170) is made from a flexible material.

9. The power device of any of claims 1-8, wherein the rigid frame (100) comprises an upper section (120), a lower section (130), and two side sections (140, 150) all having a substantially same thickness.

10. The power device of any of claims 1-9, wherein the axis (200) lies proximate to a longitudinal centerline of the blade assembly (20).

11. A collection assembly (70) configured to be used with a power device according to one of claims 1-10, the collection assembly (70) comprising:
a rigid frame (100) defining an opening (180);
a bag assembly (110) having a bag (170) operably coupled to the rigid frame (100) at the opening (180), **characterized in that** the bag assembly (110) further comprising:
a rotatable plate (160) made of a rigid material having an axis (200) extending substantially parallel to the blade assembly (20) of the power device; and
wherein the bag (170) creates a seal between the rigid frame (100) and the rotatable plate (160).

12. The collection assembly (70) of claim 11, wherein the collection assembly (70) further comprises a connection assembly (190) for removably coupling the collection assembly (70) to the blade assembly (20).

13. The collection assembly (70) of claim 11, wherein the collection assembly (70) further comprises a connection assembly (190) for removably coupling the collection assembly (70) to a body of the power device and the blade assembly (20).

## Patentansprüche

1. Leistungsgerät, umfassend:
eine Schneidklingenanordnung (20) umfassend zumindest eine Schneidklinge;
eine Motoranordnung (30), welche die Schneidklingenanordnung (20) antreibt; und
eine Auffanganordnung (70), wobei die Auffanganordnung (70) umfasst:
einen starren Rahmen (100), der eine Öffnung (180) definiert;
eine Beutelanordnung (110) mit einem Beutel (170), der wirkmäßig mit dem starren Rahmen (100) an der Öffnung (180) gekoppelt ist, **dadurch gekennzeichnet, dass** die Beutelanordnung (110) ferner umfasst:
eine drehbare Platte (160), die aus einem starren Material hergestellt ist,
mit einer Achse (200), die sich im Wesentlichen parallel zu der Schneidklingenanordnung (20) erstreckt; und
wobei der Beutel (170) eine Dichtung zwischen dem starren Rahmen (100) und der drehbaren Platte (160) erzeugt.

2. Leistungsgerät nach Anspruch 1, wobei die Auffanganordnung (70) wirkmäßig mit der Schneidklingenanordnung (20) gekoppelt ist.

3. Leistungsgerät nach Anspruch 2, wobei die Auffanganordnung (70) ferner eine Verbindungsanordnung (190) zur abnehmbaren Kopplung der Auffanganordnung (70) mit der Schneidklingenanordnung (20) umfasst.

4. Leistungsgerät nach Anspruch 1, wobei die Auffanganordnung (70) wirkmäßig mit einem Körper des Leistungsgeräts und der Schneidklingenanordnung (20) gekoppelt ist.

5. Leistungsgerät nach Anspruch 4, wobei die Auffanganordnung (70) ferner eine Verbindungsanordnung (190) zur abnehmbaren Kopplung der Auffanganordnung (70) mit dem Körper des Leistungsgeräts und der Schneidklingenanordnung (20) umfasst.

6. Leistungsgerät nach einem der Ansprüche 1 bis 5, wobei die drehbare Platte (160) sich durch die Öffnung (180) dreht, die durch den starren Rahmen (100) definiert wird, was eine Veränderung der Seite ermöglicht, auf welcher die Schneidklingenanordnung (20) in ein zu schneidendes Material eingreift.

7. Leistungsgerät nach einem der Ansprüche 1 bis 6, wobei die drehbare Platte (160) um bis zu 180 Grad in Bezug auf die Achse (200) drehbar ist.

8. Leistungsgerät nach einem der Ansprüche 1 bis 7, wobei der Beutel (170) aus einem flexiblen Material hergestellt ist.

9. Leistungsgerät nach einem der Ansprüche 1 bis 8, wobei der starre Rahmen (100) einen oberen Abschnitt (120), einen unteren Abschnitt (130) und zwei Seitenabschnitte (140, 150) umfasst, die alle im Wesentlichen dieselbe Dicke aufweisen.

10. Leistungsgerät nach einem der Ansprüche 1 bis 9, wobei die Achse (200) in der Nähe einer Längsmittellinie der Schneidklingenanordnung (20) liegt.

11. Auffanganordnung (70), die dazu ausgestaltet ist, mit einem Leistungsgerät nach einem der Ansprüche 1 bis 10 verwendet zu werden,
wobei die Auffanganordnung (70) umfasst:
einen starren Rahmen (100), der eine Öffnung (180) definiert;
eine Beutelanordnung (110) mit einem Beutel (170), der wirkmäßig mit dem starren Rahmen (100) an der Öffnung (180) gekoppelt ist, **dadurch gekennzeichnet, dass** die Beutelanordnung (110) ferner umfasst:
eine drehbare Platte (160), die aus einem starren Material hergestellt ist, mit einer Achse (200), die sich im Wesentlichen parallel zu der Schneidklingenanordnung (20) des Leistungsgeräts erstreckt; und
wobei der Beutel (170) eine Dichtung zwischen dem starren Rahmen (100) und der drehbaren Platte (160) erzeugt.

12. Auffanganordnung (70) nach Anspruch 11, wobei die Auffanganordnung (70) ferner eine Verbindungsanordnung (190) zur abnehmbaren Kopplung der Auffanganordnung (70) mit der Schneidklingenanordnung (20) umfasst.

13. Auffanganordnung (70) nach Anspruch 11, wobei die Auffanganordnung (70) ferner eine Verbindungsanordnung (190) zur abnehmbaren Kopplung der Auffanganordnung (70) mit einem Körper des Leistungsgeräts und der Schneidklingenanordnung (20) umfasst.

## Revendications

1. Dispositif électrique comprenant :
un ensemble lame (20) comprenant au moins une lame de coupe ;
un ensemble moteur (30) qui alimente l'ensemble lame (20) ; et
un ensemble de collecte (70), l'ensemble de collecte (70) comprenant :
un châssis rigide (100) définissant une ouverture (180) ;
un ensemble sac (110) ayant un sac (170) couplé de manière fonctionnelle au châssis rigide (100) au niveau de l'ouverture (180), **caractérisé en ce que** l'ensemble sac (110) comprend en outre :
une plaque rotative (160) réalisée en un matériau rigide ayant un axe (200) s'étendant sensiblement parallèlement à l'ensemble lame (20) ; et
où le sac (170) crée une étanchéité entre le châssis rigide (100) et la plaque rotative (160).

2. Dispositif électrique de la revendication 1, dans lequel l'ensemble de collecte (70) est couplé de manière fonctionnelle à l'ensemble lame (20).

3. Dispositif électrique de la revendication 2, dans lequel l'ensemble de collecte (70) comprend en outre un ensemble de liaison (190) pour coupler de manière amovible l'ensemble de collecte (70) à l'ensemble lame (20).

4. Dispositif électrique de la revendication 1, dans lequel l'ensemble de collecte (70) est couplé de manière fonctionnelle à un corps du dispositif électrique et à l'ensemble lame (20).

5. Dispositif électrique de la revendication 4, dans lequel l'ensemble de collecte (70) comprend en outre un ensemble de liaison (190) pour coupler de manière amovible l'ensemble de collecte (70) au corps du dispositif électrique et à l'ensemble lame (20).

6. Dispositif électrique de l'une des revendications 1 à 5, dans lequel la plaque rotative (160) tourne à travers l'ouverture (180) définie par le châssis rigide (100) s'adaptant à un changement d'un côté de l'ensemble lame (20) s'engageant avec un matériau à couper.

7. Dispositif électrique de l'une des revendications 1 à 6, dans lequel la plaque rotative (160) peut tourner jusqu'à 180 degrés par rapport à l'axe (200).

8. Dispositif électrique de l'une des revendications 1 à 7, dans lequel le sac (170) est réalisé en un matériau souple.

9. Dispositif électrique de l'une des revendications 1 à 8, dans lequel le châssis rigide (100) comprend une section supérieure (120), une section inférieure (130) et deux sections latérales (140, 150) ayant toutes sensiblement la même épaisseur.

10. Dispositif électrique de l'une des revendications 1 à 9, dans lequel l'axe (200) est situé à proximité d'une ligne médiane longitudinale de l'ensemble lame (20).

11. Ensemble de collecte (70) configuré pour être utilisé avec un dispositif électrique selon l'une des revendications 1 à 10,
l'ensemble de collecte (70) comprenant :
un châssis rigide (100) définissant une ouverture (180) ;
un ensemble sac (110) ayant un sac (170) couplé de manière fonctionnelle au châssis rigide (100) au niveau de l'ouverture (180), **caractérisé en ce que** l'ensemble sac (110) comprend en outre :
une plaque rotative (160) réalisée en un matériau rigide ayant un axe (200) s'étendant sensiblement parallèlement à l'ensemble lame (20) du dispositif électrique ; et
dans lequel le sac (170) crée une étanchéité entre le châssis rigide (100) et la plaque rotative (160).

12. Ensemble de collecte (70) de la revendication 11, dans lequel l'ensemble de collecte (70) comprend en outre un ensemble de liaison (190) pour coupler de manière amovible l'ensemble de collecte (70) à l'ensemble lame (20) .

13. Ensemble de collecte (70) de la revendication 11, dans lequel l'ensemble de collecte (70) comprend en outre un ensemble de liaison (190) pour coupler de manière amovible l'ensemble de collecte (70) à un corps du dispositif électrique et à l'ensemble lame (20).
